# EUROPEAN PATENT APPLICATION

(11) **EP 2 608 610 A1**
(43) Date of publication of application: **26.06.2013**
(21) Application number: 11306753.2
(22) Date of filing: 22.12.2011
(51) Int. Cl.: H04W 64/00, H04W 68/00, H04W 8/00

(54) **Method for notifying a user of a device of the occurrence of an event**

(71) Applicant: FRANCE TELECOM, 75015 Paris (FR)
(72) Inventor: Nakano, Asako, TOKYO, Tokyo 160-0022 (JP); Zemek, Radim, TOKYO, Tokyo 1890013 (JP)

(57) **Abstract**

The invention relates to a method for notifying a user of a first device of the occurrence of an incoming event, the method comprising the following steps of :
- detecting the presence of a second device within a predetermined range around the first device, the detection of the second device triggering a specific functioning mode of the first device, called proximity mode,
- detecting the occurrence of the incoming event,
- determining the second device is no longer within the predetermine range, the absence of the second device within the predetermined range terminating the proximity mode,
notifying the user of the first device of the occurrence of the incoming event.

## Description

The present invention generally relates to mobile devices embedding an event notification function.

Mobile devices, such as mobile phones for examples, are designed to receive events such as phone calls, e-mails, SMS, MMS, notifications from social networks, etc. upon reception of such events, devices notify the users of the occurrence of said events by emitting a specific sound or vibrating.

If the user of the device does not check regularly their device, they might not know they have received a phone call. Nevertheless it is an inconvenience for a user to check regularly their device for new events.

It is known from patent application US 2007/0015503 a method for alerting a user of the occurrence of an event taking into account the presence of the user. In such a method, once the device detects the occurrence of an event, such as an incoming call, a controller that detects the presence of the user is switched on. Such a controller of the presence of the user is for example a temperature sensor which is capable of detecting a body temperature or a motion detector.

However, the presence of the user, i.e. the fact that a user grabs their devices, does not mean the user is available to check their missed events. Then, even when the device notifies their user of the occurrence of an event, the user will not necessarily check the missed event because they are not alone.

There is a need for a context-aware solution for notifying events occurring on mobiles devices.

To that extend, the present invention relates to a method for notifying a user of a first device of the occurrence of an incoming event, the method comprising the following steps of :
- detecting the presence of a second device within a predetermined range around the first device, the detection of the second device triggering a specific functioning mode of the first device, called proximity mode,
- detecting the occurrence of the incoming event,
- determining the second device is no longer within the predetermine range, the absence of the second device within the predetermined range terminating the proximity mode,
- notifying the user of the first device of the occurrence of the incoming event.

The method object of the invention make it possible to inform a user of a mobile device of the occurrence of an event, such as an incoming call or a SMS, when they are not in the company of other people, thus respecting the privacy of the user.

This is made possible by sensing the presence of another device, i.e. another user, in the vicinity of the device of the user. When an event occurs on the device of the user, the device of the user determines if another device is located in its vicinity, meaning the privacy of the user is not guaranteed. If it is the case, the device enters in a proximity mode. When entering the proximity mode, the device does not notify the user of the occurrence of an event, thus preserving their privacy.

When the device determines that the other device is no longer in the vicinity of the device of the user, the device terminates the proximity mode and notifies the user of the occurrence of the event.

According to the method of the invention, when the second device is still within the predetermined range, the first device does not notify the user of the occurrence of the event.

As long as the other device is in the vicinity the device of the user, the device remains in the proximity mode and does not notify the event to the user.

According to the method of the invention, the first device determines the presence of the second device within the predetermined range at regular intervals.

By detecting regularly the presence of another device, the method of the invention is reactive. It is then possible to rapidly determine which mode, i.e. normal mode or proximity mode, the device of the user must function and thus guaranty the privacy of the user.

The method of the invention further comprises a step of detecting a motion of the first device, the detection of the motion of the first device triggering the step of detecting the presence of the second device within the predetermined range.

The detection of another device in the vicinity of the device of the user is triggered by the detection of a motion of a device. Generally a motion of a device means that its user is moving and is potentially available for being notified an event.

According to the method of the invention, the step of determining if the second device is within the predetermine range consists in calculating a distance between the first and the second device and comparing the calculated distance with a predetermined threshold.

The range can be expressed as a minimum distance between the device and another device ensuring the privacy of the user of the device. If the distance separating the device and the other device is greater than the predetermined range, the privacy is ensured and the device can notify its user of the occurrence of an event.

According to the method of the invention, the step of notifying the user of the first device of the occurrence of the event consists in emitting a sound.

Another object of the invention is a device capable of notifying a user of said device of the occurrence of an incoming event, the device comprising :
- means for detecting the presence of another device within a predetermined range around the device, the detection of the other device triggering a specific functioning mode of the device, called proximity mode,
- means for detecting an occurrence of an incoming event,
- means for determining the other device is no longer within the predetermine range, the absence of the other device within the predetermined range terminating the proximity mode,
- means for notifying the user of the first device of the occurrence of the incoming event.

Such a device is a mobile device, e.g. a Smartphone, a tablet, a mobile phone, etc.

Finally, another object of the invention concerns computer programs, in particular computer programs on or in an information medium or memory, suitable for implementing the method for notifying a user of a device of the occurrence of an event object of the invention. These programs can use any programming language, and be in the form of source code, binary code, or of code intermediate between source code and object code such as in a partially compiled form, or in any other desirable form for implementing the methods according to the invention.

The information medium may be any entity or device capable of storing the program. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The program according to the invention may in particular be downloaded from a network of Internet type.

The present system and method are explained in further detail, and by way of example, with reference to the accompanying drawings wherein:
FIG. 1 represents a system in which the method for notifying the user of a device of the occurrence of an event object of the invention,
FIG. 2 represents the steps of the method for notifying the user of a device of the occurrence of an event object of the invention,
FIG. 3 represents a device capable of executing the method for notifying the user of a device of the occurrence of an event object of the invention.

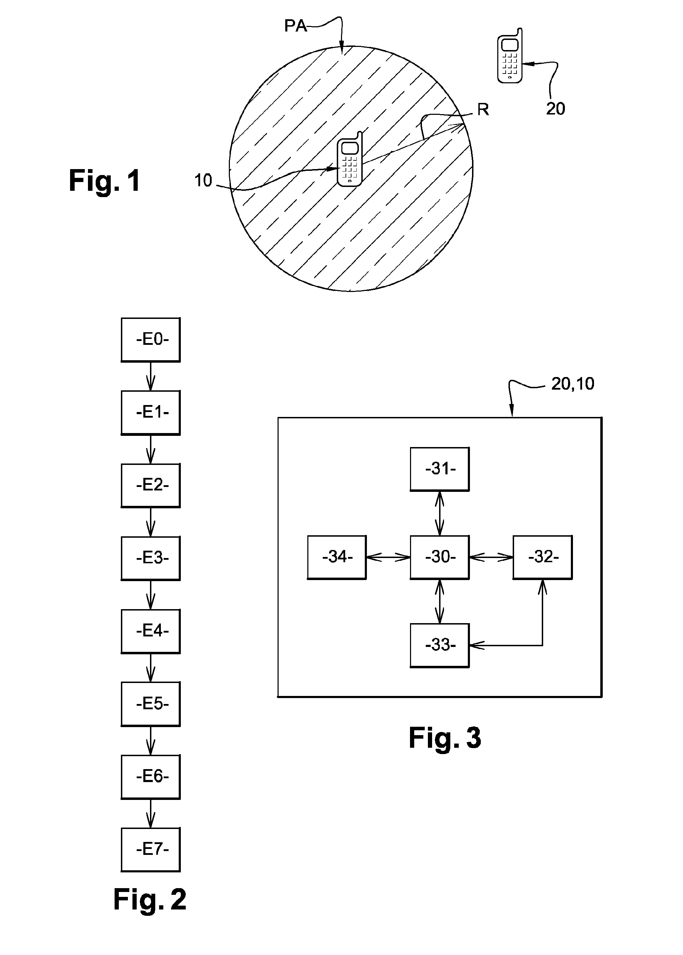

**Figure 1** represents a system in which the solution of the invention can be used. A first device 10 and a second mobile device 20 are located in the vicinity of each other. The first device 10 and the second device 20 are or example mobile devices such as mobiles phones, Smartphones, tablets, etc.

A privacy area PA is defined around the first device 10. The privacy area PA is, for example, a circle the radius of which is R. The radius R of the privacy area PA defines a range beyond which the privacy of the user of the first device 10 is deemed to be guaranteed.

Thus, in order to guarantee the privacy of the user of the first device 10, each time an event occurs, the first device 10 determines whether or not the second device 20 is located in the privacy area PA.

**Figure 2** represents the steps of the method executed by the first device 10 to achieve this goal.

In a step E1 the first device 10 detects the presence of the second device within the privacy area PA.

In order to determine if the second device is within the privacy area PA, the first device 10 calculates the distance between the first device 10 and the second device 20.

In a step E2, the distance calculated during step E1 is compared to a predetermined threshold. If the distance between the first device 10 and the second device 20 is shorter than or equal to the predetermined threshold, then the second device 20 is located within the privacy area PA.

For example the privacy area has a radius R of 5 meters, which is the value of the predetermined threshold. If the distance between the first device 10 and the second device 20 is 4 meters, then the distance between the fist device 10 and the second device 20 is below the predetermined threshold, and the second device 20 is located within the privacy area PA.

In a first embodiment of the invention, when the first device 10 and second device 20 embed NFC (Near Field Communication) technology, defined in the document referenced NFCIP-1 (ISO/CEI 18092), the range R, i.e. the predetermined threshold, beyond which the privacy of the user of the first device 10 is deemed to be guaranteed corresponds to the minimum distance for which a first NFC device is capable of detecting a second NCF device.

In other words, if the distance between the first device 10 and the second device 20 is shorter than or equal to the minimum distance for which a first NFC device is capable of detecting a second NCF device, then the first device 10 determines that the second device 20 is located within the privacy area PA.

In a second embodiment of the invention, when the first device 10 and second device 20 embed Bluetooth® technology, the range R, i.e. the predetermined threshold, beyond which the privacy of the user of the first device 10 is deemed to be guaranteed corresponds to the minimum distance for which a first Bluetooth® device is capable of detecting a second Bluetooth® device.

In other words, if the distance between the first device 10 and the second device 20 is shorter than or equal to the minimum distance for which a first Bluetoothe device is capable of detecting a second Bluetooth® device, then the first device 10 determines that the second device 20 is located within the privacy area PA.

The distance between the first device 10 and the second device 20 can also be obtain, in a third embodiment of the invention, by exchanging messages with a base station to which the first device 10 and the second device 20 are attached.

In a step E3 the detection of the second device triggers a specific functioning mode of the first device 10, called proximity mode.

When the first device 10 enters proximity mode, that means that at least another device 20 is located in the privacy area PA, and that users other than the user of the first device 10 are in the vicinity of the user of the first device 10. Thus, when the first device receives an incoming call, the privacy of this communication is not guaranteed if the user of the first device decides to answer the call. Furthermore the notification of this incoming call, i.e. the emission by the first device of a notification sound such as a ring, can be an inconvenience.

In a step E4, the first device 10 detects the occurrence of an event, such as an incoming call or the reception of a short message, e.g. a SMS.

Having detected the occurrence of an event during step E4, the first device 10 determines if the second device 20 is still present in the privacy area PA during a step E5. In order to that, the first device 10 recalculates the distance between the first device 10 and the second device 20 and compares the new distance to the predetermined threshold.

If the second device is still present in the privacy area PA, the first device remains in the proximity mode and does not notify the user of the first device of the occurrence of an event. When in the proximity mode, the first device does not notify the user of the first device of the occurrence of an event such as an incoming call.

If the second device 20 is no longer in the privacy area PA, the first device 10 terminates the proximity mode in a step E6. In a step E7, the first device 10 notifies the user of the first device 10 by emitting an alerting sound such as a ring.

The steps E1 and E2, and E5 during which the presence of the second device within the privacy area PA are executed regularly, for example every 15 secondes, improving the reactivity of the solution. It is then possible to rapidly determine in which mode, i.e. normal mode or proximity mode, the first device 10 of the user must function and thus guaranty the privacy of the user of the first device 10.

During a step E0 executed prior to step E1, the first device 10 detects a motion of the first device 10. Such a motion is generated, for example, when the user of the first device 10 is moving or grabs the first device 10. The detection of the motion of the first device 10 triggers step E1. Step E0 is optional, in another embodiment of the method of the invention, step E0 is not executed by the first device 10.

The motion of the first device 10 can be detected by means of an accelerometer, or a GPS module embedded in the first device 10.

In another embodiment of the method of the invention, if the second device 20 located in the privacy area PA of the first device 10 is the device of a contact of the user of the first device, the presence of the second device 20 in the proximity area PA does not trigger the proximity mode.

Hence, before triggering the proximity mode, the first device 10 checks if the second device 20 is the device of a contact of the user of the first device 10. In order to do that, the first device 10 compares an identifier of the second device such as a phone number or an identifier on a social network with identifiers stored in the contact list of the first device.

In another embodiment of the method of the invention, when a plurality of devices are located in the privacy area PA of the first device 10, the first device 10 is in proximity mode. The first device 10 then checks if one of the devices located in the privacy area PA is a device of a contact of the user of the first device.

If one of the devices located in the privacy area PA of the first device 10 is the device of a contact of the user of the first device 10, when the device of the contact of the user of the first device is no longer located in the privacy area PA, the first device 10 exits the proximity mode and an incoming event can be notified to the user of the first device 10 even if other devices are still located in the privacy area PA.

**Figure 3** represents a device 10, 20 capable of executing the steps of the method of the invention.

The device 10, 20 comprises means 30 for detecting the presence of another device 10, 20 within the privacy area PA.

In order to determine if the other device 10, 20 is within the privacy area PA, the means 30 calculates the distance between the device 10, 20 and the other device 10, 20. Means 30 also compares the calculated distance with a predetermined threshold. If the distance between the device 10, 20 and the other device 10, 20 is shorter than or equal to the predetermined threshold, then the other device 10, 20 is located within the privacy area PA.

The device 10, 20 comprises means 31 for triggering a specific functioning mode of the first device 10, called proximity mode. The means 31 are connected to means 30. If means 30 detects the presence of the other device 10, 20 within the privacy area PA, the means 31 triggers the proximity mode.

The device 10, 20 comprises means 32 for detecting the occurrence of an event, such as an incoming call or the reception of a short message, e.g. a SMS.

Means 32 are connected to means 30 so as to, when the means 32 detect the occurrence of an event, the means 30 determine if the other device 10, 20 is still present in the privacy area PA.

If the other device 10, 20 is no longer in the privacy area PA, the means 31 terminate the proximity.

Means 30 and 32 are connected to means 33 for notifying the user of the device 10, 20 of the occurrence of the event by emitting an alerting sound such as a ring.

The device 10, 20 comprises, also, means 34 for detecting a motion of the device 10, 20. Means 34 can be for example an accelerometer, or a GPS. Means 34 are connected to means 30.

## Claims

1. A method for notifying a user of a first device of the occurrence of an incoming event, the method comprising the following steps of :
- detecting the presence of a second device within a predetermined range around the first device, the detection of the second device triggering a specific functioning mode of the first device, called proximity mode,
- detecting the occurrence of the incoming event,
- determining the second device is no longer within the predetermine range, the absence of the second device within the predetermined range terminating the proximity mode,
- notifying the user of the first device of the occurrence of the incoming event.

2. The method of claim 1, wherein, when the second device is still within the predetermined range, the first device does not notify the user of the occurrence of the event.

3. The method of claim 1, wherein the first device determines the presence of the second device within the predetermined range at regular intervals.

4. The method of claim 1, comprising, a step of detecting a motion of the first device, the detection of the motion of the first device triggering the step of detecting the presence of the second device within the predetermined range.

5. The method of claim 1 wherein the step of determining if the second device is within the predetermine range consists in calculating a distance between the first and the second device and comparing the calculated distance with a predetermined threshold.

6. The method of claim 1, wherein the step of notifying the user of the first device of the occurrence of the event consists in emitting a sound.

7. A device capable of notifying a user of said device of the occurrence of an incoming event, the device comprising :
- means for detecting the presence of another device within a predetermined range around the device, the detection of the other device triggering a specific functioning mode of the device, called proximity mode,
- means for detecting an occurrence of an incoming event,
- means for determining the other device is no longer within the predetermine range, the absence of the other device within the predetermined range terminating the proximity mode,
- means for notifying the user of the first device of the occurrence of the incoming event.

8. Computer program **characterized in that** it comprises program code instructions for the implementation of the steps of the method for notifying a user of the occurrence of an event as claimed in claim 1 when the program is executed by a processor.
